(19)

**Europäisches Patentamt**
**European Patent Office**
**Office européen des brevets**

(11)　**EP 4 718 521 A1**

(12)　**EUROPEAN PATENT APPLICATION**

(43) Date of publication:
　　**01.04.2026　Bulletin 2026/14**

(21) Application number: **25182605.3**

(22) Date of filing: **13.06.2025**

(51) International Patent Classification (IPC):
　　*H01M 4/134* (2010.01)　　*H01M 4/36* (2006.01)
　　*H01M 4/38* (2006.01)　　*H01M 4/583* (2010.01)
　　*H01M 10/0525* (2010.01)　　*H01M 4/02* (2006.01)
　　*H01M 4/48* (2010.01)　　*H01M 4/587* (2010.01)
　　*H01M 4/62* (2006.01)

(52) Cooperative Patent Classification (CPC):
　　**H01M 4/134; H01M 4/364; H01M 4/366;**
　　**H01M 4/386; H01M 4/483; H01M 4/583;**
　　**H01M 4/587; H01M 4/625; H01M 10/0525;**
　　H01M 2004/021; H01M 2004/027; Y02E 60/10

(84) Designated Contracting States:
　　**AL AT BE BG CH CY CZ DE DK EE ES FI FR GB**
　　**GR HR HU IE IS IT LI LT LU LV MC ME MK MT NL**
　　**NO PL PT RO RS SE SI SK SM TR**
　　Designated Extension States:
　　**BA**
　　Designated Validation States:
　　**GE KH LA MA MD TN**

(30) Priority:　**29.09.2024　CN 202411381391**

(71) Applicant: **BTR New Material Group Co., Ltd.**
　　**Shenzhen, Guangdong 518106 (CN)**

(72) Inventors:
　　• **LIU, Mingjie**
　　　**Guangdong, 518106 (CN)**

　　• **HE, Peng**
　　　**Guangdong, 518106 (CN)**
　　• **XIAO, Chengmao**
　　　**Guangdong, 518106 (CN)**
　　• **GUO, Eming**
　　　**Guangdong, 518106 (CN)**
　　• **REN, Jianguo**
　　　**Guangdong, 518106 (CN)**
　　• **HE, Xueqin**
　　　**Guangdong, 518106 (CN)**

(74) Representative: **Novagraaf Technologies**
　　**2 rue Sarah Bernhardt**
　　**CS90017**
　　**92665 Asnières-sur-Seine Cedex (FR)**

(54)　**ANODE MATERIAL, NEGATIVE ELECTRODE PLATE AND SECONDARY BATTERY**

(57)　　Provided is an anode material, a negative electrode plate and a secondary battery. The anode material includes a core body and a carbon coating layer that coats at least a partial surface of the core body, and the core body includes a matrix and an active substance. A 10-day gas production A of the anode material is less than or equal to 100 mL/kg, and the 10-day gas production A is measured by a drainage method. A residual carbon rate of the anode material is

$$\gamma = \frac{m_3 - m_2}{m_1} \times 100\%$$ , which is less than or equal to 20%. The secondary battery based on the above anode material has lower electrode plate expansion rate, great capacity and cycle stability.

**EP 4 718 521 A1**

## Description

### Technical Field

The present application relates to the field of electrochemical energy storage, and specifically relates to an anode material, a negative electrode plate and a secondary battery.

### Background

Silicon anode materials have higher theoretical energy density, and thus are generally considered to have the potential to improve properties of lithium-ion batteries. Existing silicon materials are usually compounded with metals, oxides, organic polymers, carbon and other materials to obtain anode materials with better electrical conductivity and a lower expansion effect. For example, the anode materials based on amorphous silicon and a carbon matrix are considered to have the advantages of high initial efficiency, high capacity, low expansion and good cycle stability. However, it has been found in practice that such kind of materials have the problem of easy falling of a surface coating layer, resulting in lower expansion performance and capacity of the materials than expected and deterioration of properties of the materials.

### Summary

In view of the aforementioned content, the present application provides an anode material to solve at least one of the above problems.

To achieve the above objective, the present application provides an anode material. The anode material includes a core body and a carbon coating layer that coats at least a partial surface of the core body, and the core body includes a matrix and an active substance. A 10-day gas production A of the anode material is less than or equal to 100 mL/kg. A residual carbon rate of the anode material is defined as $\gamma = \frac{m_3 - m_2}{m_1} \times 100\%$ , and the residual carbon rate $\gamma$ is less than or equal to 20%. A method for testing the 10-day gas production A includes: placing 50 g of the anode material in 300 mL of a slurry mixing tank, adding 50 g of sodium carboxymethyl cellulose with a mass fraction of 5% and 100 mL of pure water into the mixing tank, conducting stirring at a stirring frequency of 50 Hz for a stirring time of 1 h to obtain a slurry, placing the slurry in an aluminum-plastic film, and measuring the 10-day gas production A of the slurry by a drainage method. A method for testing $m_2$ includes: placing the anode material in a slurry mixing tank for stirring at a stirring frequency of 50 Hz for a stirring time of 1 h, removing the stirred anode material with a mass of $m_1$, placing the stirred anode material in a hydrofluoric acid solution with a mass fraction of 20% for soaking for 1 h, removing the soaked anode material, and measuring the soaked anode material after cleaning and drying to obtain a mass of $m_2$. A method for testing $m_3$ includes: placing the anode material with a mass of $m_1$ in a hydrofluoric acid solution with a mass fraction of 20% for soaking for 1 h, removing the soaked anode material, and measuring the soaked anode material after cleaning and drying to obtain a mass of $m_3$.

In some possible embodiments, the 10-day gas production A of the anode material is 3 mL/kg to 85 mL/kg.

In some possible embodiments, the residual carbon rate $\gamma$ of the anode material is 3% to 16%.

In some possible embodiments, a powder conductivity of the anode material at 20 kN is 0.5 S/cm to 9.5 S/cm.

In some possible embodiments, a powder conductivity of the anode material at 20 kN is 0.5 S/cm to 4.5 S/cm.

In some possible embodiments, an ID/IG of the anode material is 0.5 to 5.0.

In some possible embodiments, a specific surface area of the anode material is less than or equal to 5 $m^2/g$.

In some possible embodiments, a total pore volume of the anode material is 0.001 $cm^3/g$ to 0.1 $cm^3/g$.

In some possible embodiments, a compaction density of the anode material is 0.8 $g/cm^3$ to 1.2 $g/cm^3$.

In some possible embodiments, the anode material includes micropores, mesopores and macropores, and based on the total pore volume of the anode material, a volume proportion of the micropores is less than or equal to 5%, a volume proportion of the mesopores is 87% to 97%, and a volume proportion of the macropores is less than or equal to 13%.

In some possible embodiments, a particle size D10 of the anode material is 1 $\mu$m to 5 $\mu$m. In some possible embodiments, a particle size D50 of the anode material is 6 $\mu$m to 16 $\mu$m. In some possible embodiments, a particle size D90 of the anode material is 16 $\mu$m to 24 $\mu$m.

In some possible embodiments, an average pore size of pores of the anode material is 0.5 nm to 20 nm.

In some possible embodiments, a thickness of the carbon coating layer is 0.1 nm to 1,000 nm.

In some possible embodiments, a thickness of the carbon coating layer is 10 nm to 1,000 nm.

In some possible embodiments, the active substance includes one or more of Si, Sn, Ge, Pb, Ag, Mg, Zn, Ga, In, Sb, Bi, and alloy materials thereof.

In some possible embodiments, the active substance includes a silicon material, the silicon material includes silicon particles, and the silicon particles include one of amorphous silicon, crystalline silicon and a composite of crystalline silicon and amorphous silicon.

In some possible embodiments, the silicon material includes at least one of a silicon oxide and a silicon alloy.

In some possible embodiments, the silicon material includes silicon particles and silicon oxide layers located on surfaces of the silicon particles, and the silicon oxide layers include silicon oxides.

In some possible embodiments, an average particle size of the active substance is 0.1 nm to 500 nm.

In some possible embodiments, the active substance includes a silicon material, the silicon material includes silicon particles, and the silicon particles include amorphous silicon.

In some possible embodiments, the active substance includes a silicon material, the silicon material includes at least one of a silicon oxide and a silicon alloy.

In some possible embodiments, the active substance includes a silicon material, the silicon material includes silicon particles and silicon oxide layers located on surfaces of the silicon particles.

In some possible embodiments, the silicon oxide layers include silicon oxides, a general formula of the silicon oxides is SiOx, wherein $0.5 \leq x < 2$.

In some possible embodiments, calculated with a mass of the silicon material as 100%, a mass percentage content of oxygen atoms in the silicon material is 1% to 18%.

In some possible embodiments, a total pore volume of the matrix is 0.5 cm$^3$/g to 2.0 cm$^3$/g.

In some possible embodiments, a specific surface area of the matrix is 600 m$^2$/g to 3,000 m$^2$/g.

In some possible embodiments, the matrix includes a carbon matrix, and the carbon matrix includes one or more of amorphous carbon, graphitized carbon, a mesophase carbon microsphere, and a carbon gel.

In some possible embodiments, the matrix includes a non-carbon matrix, and the non-carbon matrix includes one or more of a metal oxide, a silicide, a silicate, a phosphate, a titanate, and an aluminum borate salt.

In some possible embodiments, the matrix of the anode material includes a carbon matrix, the active substance of the anode material includes a silicon material, and based on the mass of the anode material, a mass proportion of element carbon of the anode material is 40% to 60%, or a mass proportion of element silicon of the anode material is 35% to 55%.

The present application further provides a negative electrode plate, which includes a negative current collector and a negative active material layer arranged on the negative current collector, wherein the negative active material layer includes the aforementioned anode material.

The present application further provides a secondary battery, which includes the aforementioned negative electrode plate.

In the present application, by arranging the carbon coating layer on at least a partial surface of the core body, the carbon coating layer can achieve a protective effect on the core body, which decreases the gas production A of the anode material and is also conducive to reducing the expansion of the anode material in a cycle process, thereby improving the cycle stability of the secondary battery based on the anode material. Meanwhile, on the premise that the anode material has a certain carbon coating amount to reduce the gas production, the residual carbon rate γ of the anode material is less than or equal to 20%, so that a compaction degree of the carbon coating layer is also higher, carbon atoms are closely arranged, and convenience is provided for forming sufficient conductive channels and transmitting electrons in the carbon coating layer to maintain great electrical conductivity. A material with high electrical conductivity usually has better ion conductivity, which is conducive to reducing the internal resistance of the battery and improving the charge efficiency and discharge efficiency, thereby facilitating the improvement of the capacity and initial coulombic efficiency of the obtained secondary battery.

**Brief Description of the Drawings**

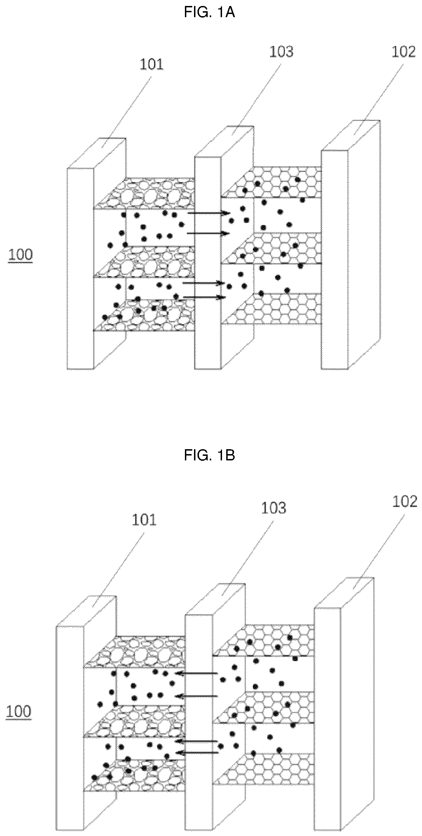

FIG. 1A is a structural schematic diagram of a secondary battery provided in an embodiment of the present application during charge.

FIG. 1B is a structural schematic diagram of a secondary battery provided in an embodiment of

the present application during discharge.

Description of main component symbols

| Electrode assembly | 100 |
| Positive electrode plate | 101 |
| Negative electrode plate | 102 |
| Diaphragm | 103 |

## Detailed Description of the Embodiments

Examples of the present application are described in detail below. The examples described below with reference to the drawings are illustrative, which are intended only to interpret the present application and shall not be construed as limitations to the present application. It should be noted that, unless otherwise defined, all technical and scientific terms used herein have the same meanings as generally understood by those skilled in the technical field of the present application. The embodiments and features in the embodiments of the present application can be combined with each other without conflict. Many specific details are set forth in the description below to facilitate a full understanding of the present application, and the embodiments described are only a part of the embodiments of the present application, rather than all of the embodiments.

Anode materials obtained by compounding silicon materials and carbon materials have excellent electrochemical properties. For example, amorphous silicon carbon materials have the advantages of high initial efficiency, high capacity, low expansion and great cycle stability. However, coating layers on surfaces of the amorphous silicon carbon materials are prone to falling, resulting in deterioration of properties of the materials. Therefore, how to prepare low-expansion and high-capacity silicon-carbon composite materials with stable outer coating layers has become one of development directions of the anode materials.

The present application has found in research that improving preparation processes of the anode materials is conducive to achieving coating layers with better compactness, so as to achieve the purpose of reducing falling of the coating layers on the surfaces of the anode materials.

Based on this, an embodiment of the present application provides a secondary battery, which includes a shell, an electrode assembly and an electrolyte. The electrode assembly and an electrolyte solution are both located in the shell.

The shell may be a packaging bag that is obtained by encapsulation with an encapsulation film (e.g., an aluminum-plastic film), for example, a pouch battery. In other examples, the secondary battery may also be a steel shell battery, an aluminum shell battery, etc.

Referring to FIG. 1A or FIG. 1B, the electrode assembly 100 includes a positive electrode plate 101, a negative electrode plate 102 and a diaphragm 103, and the diaphragm 103 is arranged between the positive electrode plate 101 and the negative electrode plate 102. When the electrolyte solution is arranged (not shown in the drawings), during charge, referring to FIG. 1A, active ions (e.g., lithium ions) are disembedded from lattices of a cathode material (e.g., a lithiated intercalation compound) of the positive electrode plate 101, pass through the diaphragm 103 through the electrolyte solution to reach the negative electrode plate 102, and then are inserted into lattices of an anode material. During discharge, referring to FIG. 1B, the active ions (e.g., lithium ions) are disembedded from the lattices of the anode material of the negative electrode plate 102, pass through the diaphragm 103 through the electrolyte solution to reach the positive electrode plate 101, and then are inserted into the lattices of the cathode material (e.g., a lithiated intercalation compound). Generated electrons reach the positive electrode plate 101 from the negative electrode plate 102 through an external circuit, and an electric current is formed by reverse movement of the electrons and can be used by electrical appliances.

In some examples, the electrode assembly 100 may be of a laminated structure, which is formed by sequentially and alternately laminating the positive electrode plate 101, the diaphragm 103 and the negative electrode plate 102. In other examples, the electrode assembly 100 may also be of a winding structure, which is formed by sequentially laminating and winding the positive electrode plate 101, the diaphragm 103 and the negative electrode plate 102.

## Positive electrode plate

The positive electrode plate 101 includes a positive current collector and a positive active material layer arranged on at least one surface of the positive current collector. The positive current collector may use aluminum foil or nickel foil, etc., and may also be any composite current collector disclosed in the prior art, for example, but not limited to, a current collector formed by combination of the aforementioned conductive foil and a polymer substrate. The positive active material layer includes an active cathode material, and the active cathode material includes a compound capable of reversibly embedding and disembedding lithium ions (i.e., a lithiated intercalation compound). In some examples, the active cathode material may include a lithium transition metal composite oxide. The lithium transition metal composite oxide contains lithium and at least one element selected from cobalt, manganese and nickel. In some examples, the active cathode material may include, but is not limited to, at least one of lithium cobaltate ($LiCoO_2$), a lithium nickel-manganese-cobalt ternary material (NCM), lithium manganate ($LiMn_2O_4$), lithium nickel manganate ($LiNi_{0.5}Mn_{1.5}O_4$), or lithium iron

phosphate (LiFePO$_4$).

The positive active material layer further includes a binder, which is used for bonding active cathode material particles to facilitate the formation of a membrane layer and can also improve the binding force between the positive active material layer and the positive current collector. In some examples, the binder may include, but is not limited to, at least one of polyvinyl alcohol, hydroxypropyl cellulose, diacetyl cellulose, polyvinyl chloride, carboxylated polyvinyl chloride, polyvinyl fluoride, ethylideneoxy-containing polymers, polyethylene pyrrolidone, polyurethane, polytetrafluoroethylene, poly(1,1-vinylidene difluoride), polyethylene, polypropylene, styrene-butadiene rubber, acrylic (ester) styrene-butadiene rubber, epoxy resin, or nylon, etc.

The positive active material layer may further include a conductive material, and the conductive material includes, but is not limited to, a carbon-based material, a metal-based material, a conductive polymer, or any combination thereof. In some examples, the carbon-based material may include, but is not limited to, natural graphite, artificial graphite, carbon black, acetylene black, Ketjen black, a carbon fiber, or any combination thereof. In some examples, the metal-based material may include, but is not limited to, a metal powder or a metal fiber, such as copper, nickel, aluminum, or silver. In some examples, the conductive polymer may be a polyphenylene derivative.

## Negative electrode plate

The negative electrode plate 102 includes a negative current collector and a negative active material layer arranged on at least one surface of the negative current collector. The negative current collector may use at least one of copper foil, nickel foil, stainless steel foil, titanium foil, or a carbon-based current collector, etc., and may also be any composite current collector disclosed in the prior art, for example, but not limited to, a current collector formed by combination of the aforementioned conductive foil and a polymer substrate.

The negative active material layer includes an anode material, the anode material includes a core body and a carbon coating layer that coats at least a partial surface of the core body, and the core body includes a matrix and an active substance. A 10-day gas production A of the anode material is less than or equal to 100 mL/kg. For example, the 10-day gas production A of the anode material may be 100 mL/kg, 85 mL/kg, 70 mL/kg, 65 mL/kg, 30 mL/kg, 20 mL/kg, 5 mL/kg, 4 mL/kg, 3 mL/kg, or any value within a range consisted of any two of the above numerical values. Wherein, a method for testing the 10-day gas production A includes: placing 50 g of the anode material in 300 mL of a slurry mixing tank, adding 50 g of sodium carboxymethyl cellulose with a mass fraction of 5% and 100 mL of pure water into the mixing tank, conducting stirring at a stirring frequency of 50 Hz for a stirring time of 1 h to obtain a slurry, placing the slurry in an aluminum-plastic film, and measuring the 10-day gas production A of the slurry by a drainage method.

In the present application, by arranging the carbon coating layer on at least a partial surface of the core body, the carbon coating layer can achieve protective effect on the core body, which decreases the gas production A of the anode material and is also conducive to reducing the expansion of the anode material in cycle process, thereby improving the cycle stability of the secondary battery based on the anode material.

A residual carbon rate of the anode material is defined as $\gamma = \frac{m_3 - m_2}{m_1} \times 100\%$, and the residual carbon rate $\gamma$ is less than or equal to 20%. For example, the residual carbon rate $\gamma$ of the anode material may be 20%, 16%, 15%, 12%, 9%, 8%, 5%, 4%, 3%, or any value within a range consisted of any two of the above numerical values. Wherein, a method for testing $m_2$ includes: placing the anode material in a slurry mixing tank for stirring at a stirring frequency of 50 Hz for a stirring time of 1 h, removing the stirred anode material with a mass of $m_1$, placing the stirred anode material in a hydrofluoric acid solution with a mass fraction of 20% for soaking for 1 h, removing the soaked anode material, and measuring the soaked anode material after cleaning and drying to obtain a mass of $m_2$. A method for testing $m_3$ includes: placing the anode material with a mass of $m_1$ in a hydrofluoric acid solution with a mass fraction of 20% for soaking for 1 h, removing the soaked anode material, and measuring the soaked anode material after cleaning and drying to obtain a mass of $m_3$.

In the examples of the present application, by improving a coating treatment process of the anode material to adjust the compactness of the coating layer of the obtained anode material, the purpose of decreasing the above residual carbon rate is achieved. In the present application, the above residual carbon rate represents a proportion of a mass of a part of the core body coated by the unstable carbon coating layer in the anode material in a total mass of the anode material. Wherein, by stirring the anode material in the present application, a coating effect of the carbon coating layer is changed through an external force, so that a part of the carbon coating layer loses the protective effect on the coated core body. Then, by means of soaking in the acid solution, a part of the core body undergoes dissolution or a reaction and is disembedded from the anode material, so that the anode material loses a part of the mass. During the process, the relatively stable carbon coating layer still has the protective effect on the coated core body under the action of the external force, so that the dissolution or reaction of the part of the core body in the acid solution is decreased, and the part of the core body is remained in the anode material to participate in the composition of the remaining mass of the anode material. Therefore, in the present application, the part of the mass lost by the anode material is used to characterize the "mass of the part of the core body coated by the unstable carbon coating layer" in the anode material, and a calculation formula of the above residual carbon rate $\gamma$ is constructed accordingly to further characterize the coating compactness of the carbon coating layer of the anode material.

The present application further finds that on the premise that the anode material has a certain carbon coating amount to reduce the gas production, in the anode material with the residual carbon rate $\gamma$ of less than or equal to 20%, the carbon coating layer has a better protective effect on the core body, so that gas production behaviors of the anode material are obviously decreased, an expansion effect is also obviously decreased, and the cycle stability of the secondary battery based on the anode material is obviously improved. Furthermore, in the anode material with the residual carbon rate $\gamma$ of less than or equal to 20%, a compaction degree of the carbon coating layer is also higher, carbon atoms are closely arranged, and convenience is provided for forming sufficient conductive channels and maintaining the movement of electrons in the carbon layer to maintain great electrical conductivity. A material with high electrical conductivity usually has better ion conductivity, which is conducive to reducing the internal resistance of the battery and improving the charge efficiency and discharge efficiency, thereby facilitating the improvement of the capacity and initial coulombic efficiency of the obtained secondary battery. However, when the residual carbon rate $\gamma$ is greater than 20%, since the protective effect of the carbon coating layer in the anode material on the core body is reduced, gas production behaviors of the anode material are severe. Moreover, since the compaction degree of the carbon layer is decreased, the efficiency of electrons passing through the carbon layer is decreased, so that the expansion effect of the anode material cannot be effectively alleviated, the cycle stability of the obtained secondary battery is reduced, and the capacity and initial coulombic efficiency of the obtained secondary battery are also negatively affected to a certain extent.

The anode material of the present application simultaneously meets the preset ranges of the 10-day gas product A and the residual carbon rate $\gamma$. Such arrangement can also avoid the phenomena that the anode material with an extremely low coating amount also has an extremely low residual carbon rate $\gamma$, but the anode material with an extremely low coating amount has an extremely large gas production and cannot have great properties.

In some examples, the residual carbon rate $\gamma$ of the anode material is less than or equal to 10%, and the 10-day gas production A is less than or equal to 50 mL/kg. For example, the residual carbon rate $\gamma$ of the anode material may be 10%, 9%, 8%, 5%, 4%, 3%, or any value within a range consisted of any two of the above numerical values; and the 10-day gas production A may be 50 mL/kg, 30 mL/kg, 20 mL/kg, 5 mL/kg, 4 mL/kg, 3 mL/kg, or any value within a range consisted of any two of the above numerical values. The anode material with the residual carbon rate $\gamma$ of less than or equal to 10% shows gas production behaviors decreased to a greater extent. At this time, the protective effect generated by coating the core body with the carbon coating layer is more obvious, which can further reduce the contact between the core body and external substances. The 10-day gas production A of the anode material controlled within the above range indicates that the anode material itself has a certain coating amount, and the coating layer with excellent compactness is formed by process improvement on this basis.

In some examples, the 10-day gas production A of the anode material is 3 mL/kg to 85 mL/kg.

In some examples, the residual carbon rate $\gamma$ of the anode material is 3% to 16%.

In some examples, a powder conductivity of the anode material at 20 kN is 0.5 S/cm to 9.5 S/cm. For example, the powder conductivity of the anode material may be 0.5 S/cm, 1.0 S/cm, 1.5 S/cm, 2.0 S/cm, 3.0 S/cm, 4.5 S/cm, 5.5 S/cm, 6.5 S/cm, 7.5 S/cm, 8.5 S/cm, 9.5 S/cm, or any value within a range consisted of any two of the above numerical values. The powder conductivity within the above range indicates that the anode material has great electrical conductivity, and electrons have great passability on the carbon coating layer, thereby facilitating the improvement of the capacity and initial coulombic efficiency of the obtained secondary battery.

In some examples, a powder conductivity of the anode material at 20 kN is 0.5 S/cm to 4.5 S/cm.

In some examples, an ID/IG of the anode material is 0.5 to 5.0. ID refers to a D peak intensity in a Raman spectrum of the anode material, IG refers to a G peak intensity in the Raman spectrum of the anode material, and an ID/IG value can be used to characterize a surface defect degree of the anode material. In the present application, when the ID/IG value meets the above range, it is indicated that a carbon material in the carbon coating layer has a higher degree of graphitization, that is, carbon atoms are arranged more orderly, so that more in-plane vibrations of $sp^2$ hybridized carbon atoms (G peaks) are formed. Such ordered structure is conducive to transmitting electrons and improving the electrical conductivity of the material. Since the carbon atoms are rearranged to form a stabler layered structure during carbonization, gaps and defects are decreased. Therefore, the carbon coating layer with a higher degree of graphitization usually has a closer structure, that is, higher compactness. Therefore, the ID/IG controlled within the above range is conducive to improving the compactness of carbon coating, thereby facilitating the decrease of the residual carbon rate $\gamma$.

In some examples, a specific surface area of the anode material is less than or equal to 5 $m^2/g$, which may be specifically 0.5 $m^2/g$, 1 $m^2/g$, 1.5 $m^2/g$, 2 $m^2/g$, 2.5 $m^2/g$, 3 $m^2/g$, 3.5 $m^2/g$, 4 $m^2/g$, 4.5 $m^2/g$, 5 $m^2/g$, or any value within a range consisted of any two of the above numerical values. It is understandable that the specific surface area of the anode material will affect a contact area between the anode material and the electrolyte solution, and the specific surface area of the anode material within the above range can decrease the amount of lithium ions consumed by forming a solid electrolyte interface (SEI) membrane during initial charge and discharge of the battery prepared from the anode material, and reduce the irreversible capacity loss of the battery.

In some examples, a particle size D10 of the anode material is 1 $\mu$m to 5 $\mu$m. For example, the particle size D10 of the anode material may be 1 $\mu$m, 1.5 $\mu$m, 2 $\mu$m, 2.5 $\mu$m, 3 $\mu$m, 3.5 $\mu$m, 4 $\mu$m, 4.5 $\mu$m, 5 $\mu$m, or any value within a range consisted of any two of the above numerical values.

In some examples, a particle size D50 of the anode material is 6 $\mu$m to 16 $\mu$m. For example, the particle size D50 of the anode material may be 6 $\mu$m, 6.5 $\mu$m, 7 $\mu$m, 8 $\mu$m, 9 $\mu$m, 10 $\mu$m, 11 $\mu$m, 12 $\mu$m, 14 $\mu$m, 16 $\mu$m, or any value within a range consisted of any two of the above numerical values.

In some examples, a particle size D90 of the anode material is 16 $\mu$m to 24 $\mu$m. For example, the particle size D90 of the anode material may be 16 $\mu$m, 16.5 $\mu$m, 17 $\mu$m, 18 $\mu$m, 19 $\mu$m, 20 $\mu$m, 21 $\mu$m, 22 $\mu$m, 24 $\mu$m, or any value within a range consisted of any two of the above numerical values.

The measured volume-based cumulative particle size distribution D10 represents the corresponding particle size when the cumulative powder particle size distribution percentage reaches 10%, the D50 represents the corresponding particle size when the cumulative particle size distribution percentage reaches 50%, and the D90 represents the corresponding particle size when the cumulative particle size distribution percentage reaches 90%. By controlling the particle size of the anode material within the above range, a diffusion path of lithium ions is shorter, the time of embedding and disembedding of the lithium ions can be ensured, and the anode material can achieve the state of fast and full lithium intercalation to ensure the charge performance and discharge performance of the battery. In addition, when the particle size of the anode material is distributed in the above range, large particles with a larger particle size and small particles with a smaller particle size of the anode material can cooperate with each other, and the small particles are filled in pores between the large particles to improve the tap density of the anode material, so that convenience is provided for improving the tightness between the particles of the anode material, improving the transmission of active particles and the conduction of electrons, improving the energy density of the obtained secondary battery, prolonging the cycle life and improving the safety performance.

In some examples, a thickness of the carbon coating layer is 0.1 nm to 1,000 nm.

In some examples, a thickness of the carbon coating layer is 10 nm to 1,000 nm. For example, the thickness of the carbon coating layer may be 0.1 nm, 0.5 nm, 1 nm, 10 nm, 30 nm, 60 nm, 100 nm, 150 nm, 200 nm, 300 nm, 500 nm, 800 nm, 1,000 nm, or any value within a range consisted of any two of the above numerical values. The carbon coating layer can coat the active substance exposed on the surface of the core body to reduce the direct contact between the active substance and the electrolyte solution, thereby decreasing the solubility of the anode material, decreasing the gas production obtained by a reaction between the dissolved active substance (e.g., silicon particles) and the electrolyte solution, and reducing the risk of generating a large number of SEI membranes during charge and discharge caused by the exposed active substance. The thickness of the carbon coating layer is controlled within the above range, which is conducive to maintaining the structural stability of the particles of the anode material during cycle processs and maintaining the great electrical conductivity of the anode material, thereby facilitating the improvement of the specific capacity and cycle stability of the obtained secondary battery.

In some examples, the carbon coating layer may be a single-layer carbon coating layer formed by a single material, may also be a carbon coating layer formed by combination of multiple materials, may also be a multi-layer carbon coating layer formed by a single material, and may also be a multi-layer carbon coating layer formed by multiple materials, etc. A layer structure of the carbon coating layer can be selected according to actual needs. It is understandable that the carbon coating layer has higher compactness when being of a multi-layer coating structure. The carbon coating layer can be formed from a variety of layers, but it typically includes materials that are substantially permeable to metal ions stored and released by the active material, so as not to impede the operation of the battery. In some designs, the carbon coating layer can be a composite material that includes at least an inner layer and an outer layer, and may have one or more other layers as well. Thus, the carbon coating layer can be made by combining different types of coatings described above, providing separate layers for different functions. For example, one constituent layer of the carbon coating layer can provide better structural strength, while another constituent layer can provide better ionic conductivity.

In some examples, the active substance includes one or more of Si, Sn, Ge, Pb, Ag, Mg, Zn, Ga, In, Sb, Bi, and alloy materials thereof.

In some examples, the active substance includes a silicon material, the silicon material includes silicon particles, and the silicon particles include one of amorphous silicon, crystalline silicon, and a composite of crystalline silicon and amorphous silicon. When the active material includes the silicon material, the silicon material is used as a component of the negative active substance, which can increase the specific capacity of the anode material and then increase the energy density of the secondary battery. Preferably, the silicon material includes amorphous silicon. When the active substance further includes the amorphous silicon, the amorphous silicon is expanded isotropically during a lithium intercalation process, which can reduce the hole collapse to facilitate the decrease of the expansion effect, and can inhibit the rapid decrease of the specific capacity of the anode material to facilitate the improvement of the lithium intercalation cycle performance of the anode material, thereby facilitating the improvement of the initial coulombic efficiency, capacity and cycle stability of the obtained secondary battery.

In some examples, the silicon material includes at least one of a silicon oxide and a silicon alloy.

In some examples, the silicon material includes silicon particles and silicon oxide layers located on surfaces of the silicon particles. The silicon oxide layers include silicon oxides, a general formula of the silicon oxides is $SiO_x$, wherein $0.5 \leq x < 2$. Specifically, the $SiO_x$ may be specifically $SiO_{0.5}$, $SiO_{0.7}$, $SiO_{0.9}$, $SiO$, $SiO_{1.2}$, $SiO_{1.5}$, $SiO_{1.8}$, $SiO_{1.9}$, etc, which is not limited herein. In some examples, calculated with the mass of the silicon material as 100%, a mass percentage content of oxygen atoms in the silicon material is 1% to 18%. Specifically, the mass percentage content of the oxygen atoms in the silicon material may be 1%, 2%, 3%, 4%, 5%, 6%, 7%, 8%, 9%, 10%, 11%, 12%, 13%, 14%, 15%, 16%, 17%, 18%, or any value within a range consisted of any two of the above numerical values. When the mass percentage content of the oxygen atoms in the silicon material is controlled within the above range, convenience is provided for forming the stable silicon oxide layers on the surfaces of the silicon particles, direct contact between the silicon particles and the electrolyte solution can be reduced to reduce a side reaction between the silicon material and the electrolyte solution, and the cycle stability of the anode material is improved. It can also be ensured that the silicon material has stable activity, and the specific capacity of the anode material is increased.

In some examples, the active substance includes a silicon material, and a mass content of element silicon in the anode material is 35% to 55%, which may be specifically 35%, 38%, 40%, 43%, 45%, 48%, 50%, 52%, 55%, or any value within a range consisted of any two of the above numerical values. When the mass proportion of the element silicon is within the range, the formed secondary battery can store a higher electric quantity, that is, a higher initial discharge specific capacity.

In some examples, an average particle size of the active substance is 0.1 nm to 500 nm. For example, the particle size of the active substance may be 0.1 nm, 0.5 nm, 1 nm, 5 nm, 10 nm, 30 nm, 50 nm, 100 nm, 150 nm, 200 nm, 300 nm, 400 nm, 500 nm, or any value within a range consisted of any two of the above numerical values. For example, the active substance may be the silicon material, that is, the silicon particles. By arranging the average particle size of the silicon particles within the above range, mechanical stress of the silicon particles during volume expansion can be reduced to make the secondary battery maintain a better battery capacity and reduce irreversible capacity loss, and a transport path of electrons and ions can also be shortened. Meanwhile, the size of the silicon particles is decreased, and gaps between adjacent silicon particles are increased, so that a space can be reserved for the volume expansion of the silicon particles, and convenience is provided for reducing the risks of pulverization and crushing of the obtained anode material due to the expansion effect.

In some examples, morphology of the silicon particles includes at least one of a point shape, a spherical shape, an ellipsoidal shape, and a flaky shape.

In some examples, a purity of the silicon particles is greater than 99%. The high-purity silicon particles are more conducive to Li-Si alloying with lithium to improve the cycle performance of a lithium-ion battery.

In some examples, a total pore volume of the matrix is 0.5 $cm^3$/g to 2.0 $cm^3$/g. For example, the total pore volume of the matrix may be 0.5 $cm^3$/g, 0.8 $cm^3$/g, 1 $cm^3$/g, 1.2 $cm^3$/g, 1.5 $cm^3$/g, 1.8 $cm^3$/g, 2.0 $cm^3$/g, or any value within a range consisted of any two of the above numerical values. The total pore volume of the matrix within the above range indicates that the matrix has abundant pores, and these pores can accommodate the active substance and reserve a space for the volume expansion of the accommodated active substance to effectively reduce the risks of pulverization and crushing of the obtained anode material due to the expansion effect.

In some examples, a total pore volume of the anode material is 0.001 $cm^3$/g to 0.1 $cm^3$/g. For example, the total pore volume of the anode material may be 0.001 $cm^3$/g, 0.002 $cm^3$/g, 0.005 $cm^3$/g, 0.008 $cm^3$/g, 0.01 $cm^3$/g, 0.02 $cm^3$/g, 0.03 $cm^3$/g, 0.04 $cm^3$/g, 0.05 $cm^3$/g, 0.06 $cm^3$/g, 0.07 $cm^3$/g, 0.08 $cm^3$/g, 0.09 $cm^3$/g, 0.1 $cm^3$/g, or any value within a range consisted of any two of the above numerical values.

Compared with an anode material after removing the active substance, such as the silicon particles, that is, the matrix, the pore volume of the anode material containing the active substance is obviously decreased, indicating that the compactness of the anode material is increased, and the specific capacity of the anode material can be effectively increased. In the present application, by controlling the total pore volume of the anode material filled with the active substance, such as the silicon particles, and the anode material after removing the active substance, such as the silicon particles, within the above range, not only can the specific capacity of the anode material be increased, but also it can be ensured that the anode material can reserve an appropriate number of pores for relieving the volume expansion caused by the active substance, such as the silicon particles, during lithium deintercalation, and convenience is provided for improving the cycle performance of the anode material.

In some examples, with the active substance as the silicon particles as an example, in a stirring state, 150 mL of an HF acid solution with a mass fraction of 20% is added dropwise into 10 g of the anode material to produce $SiF_4$ and an $H_2$ gas and release heat, centrifugation is conducted to remove an acidic supernatural after no gas is produced, 150 mL of an HF acid solution with a mass fraction of 20% is added into the anode material again, stirred for 12 h and centrifuged again to remove an acidic supernatural, and then the anode material is washed with pure water to neutral and dried to obtain the anode material after removing the silicon material, that is, the matrix.

In some examples, an average pore size of pores of the anode material is 0.5 nm to 20 nm, and specifically, the average pore size of the pores of the anode material may be 0.5 nm, 0.8 nm, 1.0 nm, 1.3 nm, 1.5 nm, 1.8 nm, 2.0 nm, 3.0 nm, 4.0 nm, 5.0 nm, 6.0 nm, 7.0 nm, 10 nm, 12 nm, 15 nm, 18 nm, 20 nm, or any value within a range consisted of any two of the above numerical values. By controlling the average pore size of the pores of the anode material, convenience is provided for buffering the volume expansion of the active substance and improving the structural stability of the anode material while the rate performance of the anode material is improved.

In some examples, a compaction density of the anode material is 0.8 g/cm$^3$ to 1.2 g/cm$^3$, which may be specifically 0.8 g/cm$^3$, 0.9 g/cm$^3$, 1.0 g/cm$^3$, 1.1 g/cm$^3$, 1.2 g/cm$^3$, or any value within a range consisted of any two of the above numerical values.

In some examples, the pores of the anode material include micropores, wherein a volume proportion of the micropores in all the pores is less than or equal to 5%.

In some examples, the pores of the anode material include mesopores, and a volume proportion of the mesopores in all the pores is 87% to 97%.

In some examples, the pores of the anode material include macropores, and a volume proportion of the macropores in all the pores is less than or equal to 13%.

It is understandable that since many pores, especially the micropores, in the carbon material are filled with the active substance, such as the silicon particles, the pores of the anode material mainly include the mesopores and the macropores. It is understandable that since the molecular size generated by the electrolyte solution is generally less than or equal to the pore size of the micropores, under the action of a strong capillary adsorption capacity of the micropores, the adsorption capacity of the anode material has a directly proportional relationship with the pore volume of the micropores to a large extent. For example, with the increase of the volume of the micropores, the adsorption capacity of the anode material is increased, and then a side reaction between the anode material and the electrolyte solution is increased. Therefore, by controlling the volume proportions of the micropores, the mesopores and the macropores in the anode material within the range, the distribution uniformity of the silicon material in the anode material can be improved. Specifically, the micropores are basically filled with the active substance, and most of the remaining pores are the mesopores, so that the volume expansion of the active substance can be effectively alleviated, and too large local expansion stress and crushing and pulverization of the anode material caused by uneven volume change of the active substance during a cycle process of the anode material are reduced.

In some examples, a specific surface area of the matrix is 600 m$^2$/g to 3,000 m$^2$/g. The matrix that conforms to the above specific surface area range has more developed pores and a large number of micropores, which is conducive to the deposition of the active substance.

In some examples, the matrix includes a carbon matrix, and the carbon matrix includes one or more of amorphous carbon, graphitized carbon, a mesophase carbon microsphere, and a carbon gel. By selecting the above materials, the carbon matrix can achieve the effects of providing distribution sites for the active substance and forming a conductive network.

In some examples, the matrix includes a carbon matrix, and a mass content of element carbon in the anode material is 40% to 60%, which may be specifically 40%, 42%, 43%, 45%, 48%, 50%, 52%, 55%, 57%, 59%, 60%, or any value within a range consisted of any two of the above numerical values. Wherein, the element carbon includes a carbon matrix and a carbon coating layer. When the mass proportion of the element carbon is within the range, a sufficient carbon-based substrate can be established to provide sufficient distribution sites for the active substance, and convenience is provided for forming an effective conductive network and improving the electrical conductivity and cycle stability.

In some examples, the matrix includes a non-carbon matrix, and the non-carbon matrix includes one or more of a metal oxide, a silicide, a silicate, a phosphate, a titanate, and an aluminum borate salt. By adopting the above materials, the non-carbon matrix can achieve the effect of supporting a skeleton. Moreover, compared with existing conductive carbon matrices, the non-carbon matrix used in the present application has better strength and stiffness, so that the anode material can have higher compaction density in a battery preparation process, the structural stability of the anode material can be improved to reduce the crushing and pulverization of particles of the anode material, and convenience is provided for improving the cycle performance of the anode material. Meanwhile, due to electronic insulation, the non-carbon matrix usually has great ionic conductivity, which can play a role like an artificial SEI membrane and is capable of slowing down subsequent generation of a natural SEI membrane, reducing direct contact between the anode material and the electrolyte solution and reducing the occurrence of side reactions. Furthermore, the non-carbon matrix has the advantage of a lower cost than the carbon matrix. Due to the complexity of activating a pore making process, the energy consumption and the environmental cost involved in existing carbon matrices are higher. However, when natural substances with porous pores, such as porous ceramics, are used, the pore making process is eliminated, so that the cost can be obviously reduced compared with the porous carbon matrix.

The negative active material layer further includes a binder that is used for bonding active anode material particles to facilitate the formation of a membrane layer and can also improve the binding force between the negative active material layer and the negative current collector. In some examples, the binder may include, but is not limited to, polyvinyl alcohol, hydroxypropyl cellulose, diacetyl cellulose, polyvinyl chloride, carboxylated polyvinyl chloride, polyvinyl fluoride, ethylideneoxy-containing polymers, polyethylene pyrrolidone, polyurethane, polytetrafluoroethylene, poly(1,1-vinylidene difluoride), polyethylene, polypropylene, styrene-butadiene rubber, acrylic (ester) styrene-butadiene rubber, epoxy resin, or nylon, etc.

The negative active material layer may further include a conductive material, and the conductive material includes, but is not limited to, a carbon-based material, a metal-based material, a conductive polymer, or any combination thereof. In some examples, the carbon-based material may include, but is not limited to, natural graphite, artificial graphite, carbon black, acetylene black, Ketjen black, a carbon fiber, or any combination thereof. In some examples, the metal-based material may include, but is not limited to, a metal powder or a metal fiber, such as copper, nickel, aluminum, or silver. In some examples, the conductive polymer may be a polyphenylene derivative.

**Diaphragm**

The diaphragm 103 includes a membrane layer with a porous structure, and a material of which includes, but is not limited to, at least one of polyethylene, polypropylene, polyvinylidene fluoride, polyethylene glycol terephthalate, polyimide, or aramid fiber. For example, the diaphragm 103 may be a polypropylene porous membrane, a polyethylene porous membrane, a polypropylene non-woven fabric, a polyethylene non-woven fabric, or a polypropylene-polyethylene-polypropylene porous composite membrane, etc.

**Electrolyte**

The electrolyte has the effect of conducting ions between the positive electrode plate 101 and the negative electrode plate 102. The electrolyte may have one or more states of a gel state, a solid state, and a liquid state. In some examples, the electrolyte adopts an electrolyte solution. The electrolyte solution has the effect of conducting active ions between the positive electrode plate 101 and the negative electrode plate 102. In some examples, the electrolyte solution includes a lithium salt and an organic solvent. The lithium salt may be selected from, but is not limited to, one or more of lithium hexafluorophosphate ($LiPF_6$), lithium tetrafluoroborate ($LiBF_4$), lithium hexafluoarsenate ($LiAsF_6$), lithium perchlorate ($LiClO_4$), lithium tetraphenylborate ($LiB(C_6H_5)_4$), lithium methanesulfonate ($LiCH_3SO_3$), lithium bis(fluorosulfonyl)imide (LiFSI), lithium bis(trifluoromethanesulfonyl)imide (LiTFSI), lithium trifluoromethanesulfonate ($LiCF_3SO_3$), lithium bis(trifluoromethylsulfonyl)imide ($LiN(SO_2CFs)_2$), lithium tri(trifluoromethylsulfonyl)methide ($LiC(SO_2CF_3)_3$), lithium bis(oxalate)borate (LiBOB), and lithium difluorophosphate ($LiPO_2F_2$). For example, $LiPF_6$ is selected as the lithium salt, because it can provide high ionic conductivity and improve cycle characteristics. The organic solvent may be a carbonate compound, a carboxylate compound, an ether compound, a nitrile compound, another organic solvent, or a combination thereof. Examples of the carbonate compound include, but are not limited to, diethyl carbonate (DEC), dimethyl carbonate (DMC), dipropyl carbonate (DPC), methyl propyl carbonate (MPC), ethyl propyl carbonate (EPC), methyl ethyl carbonate (MEC), ethylene carbonate (EC), propylene carbonate (PC), butylene carbonate (BC), vinylethylene carbonate (VEC), fluoroethylene carbonate (FEC), 1,2-difluoroethylene carbonate, 1,1-difluoroethylene carbonate, 1,1,2-trifluoroethylene carbonate, 1,1,2,2-tetrafluoroethylene carbonate, 1-fluoro-2-methylethylene carbonate, 1-fluoro-1-methylethylene carbonate, 1,2-difluoro-1-methylethylene carbonate, 1,1,2-trifluoro-2-methylethylene carbonate, trifluoromethylethylene carbonate, or a combination thereof.

Another embodiment of the present application further provides a method for preparing an anode material, which includes the following.

Step 1: A matrix precursor material is subjected to activation treatment to obtain a porous matrix.

In some examples, the matrix precursor material includes one or more of nut shell carbon, straw carbon, resin carbon, pitch carbon, and sugar. A porous carbon matrix can be obtained based on the above materials.

In some examples, the activation treatment includes one of water vapor activation or carbon dioxide activation, and the activation treatment includes introducing water vapor or a carbon dioxide gas under high temperature conditions and then conducting subsequent treatment to form a porous material.

In some examples, before the matrix precursor material is subjected to the activation treatment, the method further includes subjecting the matrix precursor material to pre-carbonization treatment, including subjecting the matrix precursor material to heat treatment at the condition of 300 °C to 500 °C for about 3 h and crushing the material. The pre-carbonization treatment is conducive to making the material structure more stable, thereby improving the quality and properties of a subsequently activated product. The material after the pre-carbonization treatment is subjected to the crushing, which is conducive to expanding a contact area of the material in a subsequent activation treatment and improving an activation effect to obtain a porous material with great properties.

In some examples, a temperature of the activation treatment is 800 °C to 1,100 °C. In some examples, a pressure of the activation treatment is 0.01 kpa to 10 kpa. In some examples, a total airflow of the activation treatment is 10 L/min to 100 L/min. In some examples, the activation treatment lasts for about 12 h. In some examples, the subsequent treatment includes acid pickling, water washing, drying, pulverization and sieving.

Step 2: The porous matrix is compounded with an active substance to obtain a core body.

In some examples, compounding of the porous matrix with the active substance includes mixing the porous matrix with a gas phase carrier of the active substance by means of vapor deposition under high temperature conditions to make the gas phase carrier of the active substance cracked at high temperature and make the active substance component deposited on the porous matrix.

In some examples, the vapor deposition is conducted in plasma enhanced chemical vapor deposition equipment, and reaction conditions of the vapor deposition include a pressure of 1.0 kpa to 10.0 kpa, a microwave operating frequency of 2.5 GHz, a power of 2,600 W to 3,200 W, a temperature of 400 °C to 700 °C, and a total gas flow rate of 50 Sccm to 500 Sccm. In some examples, the vapor deposition is conducted in an inert gas atmosphere.

Step 3: In plasma enhanced chemical vapor deposition equipment, the core body is mixed with a reaction gas under the conditions of a rotational speed frequency of 5 Hz to 40 Hz and a temperature of 550 °C to 700 °C, wherein the reaction gas includes an inert gas and a gaseous carbon source, and a concentration of the gaseous carbon source in the reaction gas is 10% to 70%; and the gaseous carbon source is cracked to form a carbon coating layer so as to obtain a coated core body.

During the above coating treatment, the rotational speed frequency of the equipment will affect a deposition effect during the coating treatment. When a rotational speed of a reactor is too slow, heat will be accumulated during acetylene cracking, and a local temperature will be higher than a set value, so that a crystal form of the material is converted into a crystal, and although the compactness of the coating layer is improved, properties of the anode material are decreased. When the rotational speed of the reactor is too fast, collision between particles is intensified, and due to the violent collision, the structure of a part of the already formed coating layer is likely to be damaged, or the cracked carbon source is difficult to deposit uniformly on surfaces of the particles, so that the growth of the coating layer is affected, and the compactness of the coating layer is affected. Therefore, by controlling the rotational speed frequency of the above equipment within the above range, convenience is provided for maintaining the crystal form of the material and promoting the growth and compactness of the coating layer, thereby decreasing the residual carbon rate. It is understandable that by controlling the reaction temperature within the above range, convenience is also provided for maintaining the crystal form of the material, for example, maintaining the silicon material as amorphous silicon, and improving the compactness of the coating layer, thereby facilitating the decrease of the residual carbon rate.

Meanwhile, the concentration of the gaseous carbon source in the reaction gas will also affect the deposition effect during the coating treatment. When the concentration of gaseous carbon source is too low, the coating amount is insufficient, improvement of properties of the material is limited, and the coating treatment time required is longer. When the concentration of the gas phase carbon source is too high, cracking of the carbon source is relatively intense, and a large amount of the carbon source is decomposed in a short time. On the one hand, excess carbon source in some regions may be caused to form a too thick coating layer, while incomplete coating may occur in other regions due to insufficient carbon source to form a thinner coating layer or even lead to a bare region. On the one hand, a large number of gases and impurities may also be produced, and when these gases and impurities cannot be effectively discharged during the formation of the coating layer, defects such as pores and cracks will be formed, thereby reducing the quality and compactness of the coating layer. On another hand, since the carbon source needs to undergo interaction (e.g., chemical bonding, adsorption, etc.) with the surface of the matrix during the coating to form a firm coating layer, such violent cracking may destroy the interaction, thereby decreasing the binding force between the coating layer and the matrix and affecting the stability and properties of the coating layer.

In some examples, in the plasma enhanced chemical vapor deposition equipment, conditions of the coating treatment further include a pressure of 5.0 kpa to 20.0 kpa, a microwave operating frequency of 2.0 GHz to 2.5 GHz, a power of 2,500 W to 3,500 W, and a total gas flow rate of 50 Sccm to 500 Sccm.

In some examples, the gaseous carbon source includes one or more of methane, acetylene, propylene, benzene, ethanol, methanol, ethylene, propane, and butane.

Step 4: The coated core body is pulverized and sieved to obtain an anode material.

Solutions of the present application are explained below in conjunction with examples. Those skilled in the art will understand that the examples described below are intended only to explain the present application and shall not be understood as limitations of the present application. Unless otherwise stated, reagents, software and instruments involved in the following examples, which are not specifically stated, are conventional commercially available products or open sources.

Example 1:

An anode material based on a carbon matrix and silicon particles was provided, and a preparation method included the following.

S1. 10 kg of nut shell carbon was placed in a kiln, heated to 300 °C to 500 °C for pre-carbonization for 3 h, and mechanically crushed; a crushed material was placed in a reaction furnace with a pressure set at 0.01 kpa to 10.0 kpa, and

**EP 4 718 521 A1**

water vapor was introduced at 900 °C with a total airflow of 30 L/mim and a reaction time of 12 h; and after a reaction was completed, a reaction material was subjected to acid pickling, water washing, drying, pulverization and sieving to obtain a porous carbon precursor.

S2. 100 g of the porous carbon precursor was placed in a reactor with a pressure set at 1.0 kpa to 10.0 kpa, a microwave operating frequency of 2.5 GHz and a power range of 3,000 W; and when a temperature of the reactor reached 500 °C, nitrogen and disilane were introduced with a disilane concentration of 30%, a total gas flow rate of 300 Sccm and a retention time of 6 h to obtain a core body.

S3. The core body was placed in a reactor with a pressure set at 5.0 kpa to 20.0 kpa, a microwave operating frequency of 2.0 GHz, a power range of 3,000 W and a rotational speed frequency of 15 Hz; and when a temperature of the reactor reached 550 °C, nitrogen and acetylene were introduced with an acetylene concentration of 30%, a total gas flow rate of 200 Sccm and a retention time of 6 h to obtain a coated core body.

S4. The obtained coated core body was subjected to screening and grading to obtain the anode material.

Example 2:

Different from Example 1, in S3, the reaching temperature of the reactor was adjusted to 600 °C.

Example 3:

Different from Example 1, in S3, the reaching temperature of the reactor was adjusted to 650 °C.

Example 4:

Different from Example 1, in S3, the reaching temperature of the reactor was adjusted to 700 °C.

Example 5:

Different from Example 3, in S3, the acetylene concentration was adjusted to 10%, and the retention time was adjusted to 18 h.

Example 6:

Different from Example 3, in S3, the acetylene concentration was adjusted to 50%, and the retention time was adjusted to 3.6 h.

Example 7:

Different from Example 3, in S3, the acetylene concentration was adjusted to 70%, and the retention time was adjusted to 2.6 h.

Example 8:

Different from Example 3, in S3, the rotational speed frequency was adjusted to 5 Hz.

Example 9:

Different from Example 3, in S3, the rotational speed frequency was adjusted to 25 Hz.

Example 10:

Different from Example 3, in S3, the rotational speed frequency was adjusted to 40 Hz.

Example 11:

Different from Example 3, in S3, the microwave operating frequency was 2.5 Ghz, and the power range was 3,500 W.

Comparative Example 1:

Different from Example 1, in S3, the reaching temperature of the reactor was adjusted to 480 °C.

Comparative Example 2:

Different from Example 7, in S3, the acetylene concentration was adjusted to 90%, and the retention time was adjusted to 2 h.

Comparative Example 3:

Different from Example 10, in S3, the rotational speed frequency was adjusted to 50 Hz.

Physical properties and electrochemical properties of the anode materials obtained in Examples 1-11 and Comparative Examples 1-3 above were tested, and test methods were as follows.

1. Test of the residual carbon rate $\gamma$ of an anode material:

(1) The anode material was placed in a slurry mixing tank for stirring at a stirring frequency of 50 Hz for a stirring time of 1 h, the stirred anode material with a mass of $m_1$ was removed and placed in a hydrofluoric acid solution with a mass fraction of 20% for soaking for 1 h, and the soaked anode material was removed and measured after cleaning and drying to obtain a mass of $m_2$.

(2) The anode material with a mass of $m_1$ was placed in a hydrofluoric acid solution with a mass fraction of 20% for soaking for 1 h, and the soaked anode material was removed and measured after cleaning and drying to obtain a mass of $m_3$.

(3) The residual carbon rate of the anode material was calculated as $\gamma = \frac{m_3 - m_2}{m_1} \times 100\%$.

2. Test of the gas production A of an anode material:

50 g of the anode material was placed in 300 mL of a slurry mixing tank, 50 g of sodium carboxymethyl cellulose with a mass fraction of 5% and 100 mL of pure water were added into the mixing tank for stirring at a stirring frequency of 50 Hz for a stirring time of 1 h to obtain a slurry, the slurry was placed in an aluminum-plastic film, and the 10-day gas production A of the slurry was measured by a drainage method.

3. Test of the powder conductivity of an anode material:

3 g of a powdery anode material was placed in a drying oven for full drying at 80 °C, the dried powdery anode material was evenly mixed by shaking, and 2 g of the treated powdery anode material was pressed into a round sheet by applying a force of 20 kN for 30 s. The thickness of a sample was measured by using a digital caliper and recorded. A PRCD2110 powder resistivity tester of Initial Energy Science & Technology Co., Ltd. was selected, and the pressed round sheet sample was placed on a test bench of a four-probe tester. Four probes of the four-probe tester were placed at different positions on a surface of the sample, respectively. A test program was started according to an operating instruction of the four-probe tester. A certain electric current was automatically applied to a current probe by the tester, and a voltage response on the sample was measured through a voltage probe. Then, the electrical resistivity or electrical conductivity of the sample was calculated by using a physical formula, such as Ohm's law, etc.

4. Test of the ID/IG of an anode material:

100 mg of an anode material sample was selected, wherein the sample was in a dry, stable, non-volatile and non-toxic state. Before the test was carried out, a Raman spectrometer was calibrated to ensure the accuracy of a test result. The sample was placed on a sample table of the Raman spectrometer. Appropriate test parameters were set. For example, a laser wavelength was set at 532 nm, etc. An Anton Paar Cora 5X00 series of the Raman spectrometer was started to conduct spectral scanning. A Raman spectrogram obtained in the test was recorded, positions of a D peak and a G peak in the spectrogram were found, and the intensity of the peaks was measured. The ID/IG value, that is, a ratio of the D peak intensity to the G peak intensity, was calculated. The disorder degree of the anode material was judged according to the size of the ID/IG value.

5. Test of the particle size D10, D50 and D90 of an anode material:

1 g of a powdery anode material was dissolved in 30 mL of pure water for ultrasonic oscillation for 2 min, a mixed solution obtained after the ultrasonic oscillation was poured into a measuring cylinder of a Malvern 3000 testing instrument, and the testing instrument was started to obtain particle size distribution data.

6. Test of the average particle size of an active substance and the thickness of a carbon coating layer of an anode material:

A JEM-2100F testing instrument of Japan Electronics Co., Ltd. was selected to test a TEM image of a material at high magnification, and the particle size in the TEM image was counted by statistics for data analysis to obtain the average particle size. A carbon layer on an outer layer of a particle in the TEM image was counted by statistics, the outer layer of the particle in the TEM image had an obvious boundary, the outermost layer was a carbon coating layer, and the thickness of the carbon coating layer was counted by statistics. 10 mg of the material was properly treated and prepared, dissolved in alcohol, titrated, dried, fixed, and sliced into an ultra-thin slice to ensure that a sample was suitable for observation under transmission electron microscope (TEM), the treated sample was loaded onto a sample table of the TEM by using a special sample clamp, and the position and angle of the sample were adjusted to make the sample suitable for irradiation by an electron beam. A TEM system was started, and vacuuming treatment was conducted after initialization was completed. The brightness, focusing degree, magnification and other parameters of an electronic gun were adjusted. The operating voltage and current of the instrument were calibrated to ensure that equipment was in an optimal working state. The focus of the sample was adjusted by using a focusing device of the TEM system to obtain a clear TEM image.

7. Test of the pore volume, proportion and specific surface area of an anode material and a matrix:

A Micromeritics specific surface area testing instrument ASAP 2425 was used. 0.5 g of a material was subjected to degassing treatment and then placed in the testing instrument after the degassing was completed. The testing instrument was started, and after a program was completed, an adsorption and desorption isotherm was analyzed to determine the pore volume and the pore size distribution, as well as the proportion of the respective pore volume in the total pore volume and the specific surface area of micropores, mesopores and macropores.

8. Method for testing the mass content of element carbon: A G4 ICARUS HF infrared carbon and sulfur analyzer of Bruker, Germany, was used. A sample was combusted in a high temperature oxygen-enriched state, the element carbon contained was oxidized to carbon dioxide, and the generated gas entered an infrared detector with a carrier gas. The content of the element carbon was calculated through quantitative statistics of changes in carbon dioxide signals.

9. Method for testing the mass content of element silicon: An SA2-9-17TP box-type atmosphere furnace of Nanyang Xinkyo was used. A sample was combusted in an oxygen atmosphere to make silicon in the sample reacted into silicon dioxide, carbon became carbon dioxide after combustion and was discharged, and the sample was weighed to calculate the silicon content.

10. Tests of electrochemical related properties:

(1) Assembly of a lithium-ion button battery:
Polyacrylic acid and sodium carboxymethyl cellulose were evenly mixed according to a mass ratio of 1:1, a certain amount of pure water was added, and magnetic stirring was conducted for 6-12 h to obtain a binder.

A silicon composite material and a conductive agent were added into the binder according to a mass ratio of 70:15:15, and magnetic stirring was conducted for 6-12 h to obtain a slurry.
The slurry was evenly coated on copper foil, air-dried, sliced and dried to obtain a silicon composite electrode plate.
A button battery was assembled, wherein a battery shell used was CR2032, a counter electrode was a metallic lithium sheet, and 1 M LiPF$_6$ was an electrolyte solution.

(2) Test of the capacity and initial coulombic efficiency: The button battery was placed in a mold clamp of a high-precision battery testing system, the button battery was subjected to standing treatment for a standing time of 12 h, a discharge test was carried out at a discharge current of 0.1 C, a rated capacity of 1,000 mAh and a discharge cut-off voltage of 5 mV, a charge test was carried out at a charge current of 0.1 C, a rated capacity of 1,000 mAh and a charge cut-off voltage of 1.5 V, and the capacity and initial coulombic efficiency of the button battery were tested by using the high-precision battery testing system.

(3) Cycle retention rate: After the capacity and the initial coulombic efficiency were tested, a charge-discharge cycle stability test was carried out on the button battery at 1 C, and a ratio of the capacity at the 50th cycle to the capacity at the 1st cycle was the cycle retention rate.

(4) Expansion rate: After the capacity and the initial coulombic efficiency were tested, a charge-discharge cycle stability test was carried out on the button battery at 1 C, and a ratio of the thickness at the 50th cycle to the thickness of the original electrode plate was the expansion rate.

Partial preparation conditions in Example 1-11 and Comparative Examples 1-3 above refer to Table 1, and results of the above tests are shown in Table 2.

Table 1. Partial preparation conditions in the step S3 of Example 1-11 and Comparative Examples 1-3 of the present application

| Examples | Rotational speed frequency (Hz) | Reaching temperature of a reactor (°C) | Acetylene concentration (%) | Time (h) |
|---|---|---|---|---|
| Example 1 | 15 | 550 | 30 | 6 |
| Example 2 | 15 | 600 | 30 | 6 |
| Example 3 | 15 | 650 | 30 | 6 |
| Example 4 | 15 | 700 | 30 | 6 |
| Example 5 | 15 | 650 | 10 | 18 |
| Example 6 | 15 | 650 | 50 | 3.6 |
| Example 7 | 15 | 650 | 70 | 2.6 |
| Example 8 | 5 | 650 | 30 | 6 |
| Example 9 | 25 | 650 | 30 | 6 |
| Example 10 | 40 | 650 | 30 | 6 |
| Example 11 | 15 | 610 | 30 | 6 |
| Comparative Example 1 | 15 | 480 | 30 | 6 |
| Comparative Example 2 | 15 | 650 | 90 | 2 |
| Comparative Example 3 | 50 | 650 | 30 | 6 |

Table 2. Property test results in Examples 1-11 and Comparative Examples 1-3 of the present application

| Examples | Residual carbon rate $\gamma$ (%) | 10-day gas production value of a slurry (mL/kg) | Electrical conductivity (S/cm) | ID/IG | Specific surface area of an anode material (m$^2$/g) | Capacity (mAh/g) | Initial coulombic efficiency (%) | Average expansion rate (%) | Cycle retention rate after 50 cycles (%) |
|---|---|---|---|---|---|---|---|---|---|
| Example 1 | 15.4 | 70.4 | 0.7 | 4.2 | 4.5 | 1853 | 92.3 | 48.6 | 80.3 |
| Example 2 | 9.5 | 30.3 | 1.5 | 2.6 | 3.6 | 1855 | 92.5 | 46.1 | 83.6 |
| Example 3 | 4.7 | 5.4 | 2.6 | 1.2 | 2.5 | 1853 | 92.9 | 43.1 | 89.5 |
| Example 4 | 3.4 | 3.6 | 4.3 | 0.7 | 1.8 | 1845 | 92.4 | 47.8 | 79.4 |
| Example 5 | 4.1 | 4.6 | 2.7 | 1.1 | 2.0 | 1855 | 92.8 | 43.2 | 89.6 |
| Example 6 | 8.3 | 23.6 | 1.8 | 2.3 | 2.9 | 1855 | 92.4 | 45.6 | 85.8 |
| Example 7 | 15.2 | 67.2 | 1.1 | 3.8 | 4.7 | 1855 | 92.2 | 48.2 | 81.2 |
| Example 8 | 4.5 | 3.5 | 2.8 | 1.0 | 2.4 | 1835 | 92.5 | 46.3 | 84.3 |
| Example 9 | 8.7 | 31.7 | 1.9 | 2.5 | 3.0 | 1851 | 92.6 | 48.1 | 86.2 |
| Example 10 | 16.3 | 85.3 | 0.6 | 4.8 | 4.8 | 1854 | 92.3 | 49.3 | 82.1 |
| Example 11 | 4.8 | 5.5 | 2.6 | 1.2 | 2.5 | 1855 | 92.9 | 43.1 | 89.5 |
| Comparative Example 1 | 23.3 | 120.5 | 0.4 | 5.8 | 5.9 | 1852 | 92.1 | 50.6 | 75.0 |
| Comparative Example 2 | 20.8 | 103.7 | 0.6 | 5.1 | 5.3 | 1876 | 92.3 | 50.6 | 78.5 |
| Comparative Example 3 | 21.5 | 110.8 | 0.8 | 5.3 | 5.7 | 1864 | 92.0 | 51.3 | 74.6 |

Under the conditions of improved preparation processes, the residual carbon rate $\gamma$ of the anode materials in Examples 1-11 of the present application all conform to the preset range. The carbon coating layers of these anode materials have a better protective effect on the core bodies, such that the gas production of the slurries of these anode materials is effectively decreased. The microwave frequency and the power are up-regulated in Example 11, which is conducive to decreasing the cracking temperature of silane and acetylene. Therefore, properties of a sample prepared by adjusting the temperature to 610 °C in Example 11 are basically maintained consistent with those of a sample prepared at a cracking temperature of 650 °C in Example 3. Therefore, the expansion effect is alleviated after the anode materials in Examples 1-11 are prepared into negative electrode plates, and secondary batteries prepared therefrom have better cycle stability. Meanwhile, the carbon coating layers of these anode materials have great compactness to make electrons maintain great carbon layer passability, so that these anode materials have higher capacity and initial coulombic efficiency after being prepared into the secondary batteries.

Compared with Example 1, the temperature of the coating treatment is down-regulated in Comparative Example 1. Due to the too low temperature, the cracking efficiency of the carbon source is decreased, the growth of the coating layer is affected, the coating amount in the anode material is affected, the formation of a uniform and dense coating layer is also not facilitated, and the residual carbon rate of the anode material does not conform to the preset range, so that the obtained anode material has an increased gas production, a higher expansion rate and reduced cycle stability.

Compared with Example 7, the concentration of the carbon source is increased in Comparative Example 2. The excessive carbon source promotes the phenomena of intensified cracking and concentrated cracking of the carbon source, which is not conducive to the formation of a uniform and dense coating layer, leading to the residual carbon rate not conforming to the preset range, so that the obtained anode material has an increased gas production, a higher expansion rate and reduced cycle stability.

Compared with Example 10, the rotational speed frequency in the coating treatment is up-regulated in Comparative Example 3. The too high rotational speed frequency leads to intensified collision between particles, which is not conducive to the formation of a uniform and dense coating layer, resulting in the residual carbon rate not conforming to the preset range, so that the obtained anode material has an increased gas production, a higher expansion rate and reduced cycle stability.

**Claims**

1. An anode material, comprising a core body and a carbon coating layer that coats at least a partial surface of the core body, and the core body comprising a matrix and an active substance, **characterized in that**

   a 10-day gas production A of the anode material is less than or equal to 100 mL/kg;

   a residual carbon rate of the anode material is defined as $\gamma = \frac{m_3 - m_2}{m_1} \times 100\%$, and the residual carbon rate $\gamma$ is less than or equal to 20%;

   a method for testing the 10-day gas production A comprises: placing 50 g of the anode material in 300 mL of a slurry mixing tank, adding 50 g of sodium carboxymethyl cellulose with a mass fraction of 5% and 100 mL of pure water into the mixing tank, conducting stirring at a stirring frequency of 50 Hz for a stirring time of 1 h to obtain a slurry, placing the slurry in an aluminum-plastic film, and measuring the 10-day gas production A of the slurry by a drainage method;

   a method for testing $m_2$ comprises: placing the anode material in a slurry mixing tank for stirring at a stirring frequency of 50 Hz for a stirring time of 1 h, removing the stirred anode material with a mass of $m_1$, placing the stirred anode material in a hydrofluoric acid solution with a mass fraction of 20% for soaking for 1 h, removing the soaked anode material, and measuring the soaked anode material after cleaning and drying to obtain a mass of $m_2$;

   and a method for testing $m_3$ comprises: placing the anode material with a mass of $m_1$ in a hydrofluoric acid solution with a mass fraction of 20% for soaking for 1 h, removing the soaked anode material, and measuring the soaked anode material after cleaning and drying to obtain a mass of $m_3$.

2. The anode material according to claim 1, **characterized in that** the 10-day gas production A of the anode material is 3 mL/kg to 85 mL/kg.

3. The anode material according to claim 1, **characterized in that** the residual carbon rate $\gamma$ of the anode material is 3% to 16%.

4. The anode material according to claim 1, **characterized in that** a powder conductivity of the anode material at 20 kN is 0.5 S/cm to 9.5 S/cm.

5. The anode material according to claim 1, **characterized in that** a powder conductivity of the anode material at 20 kN is 0.5 S/cm to 4.5 S/cm.

6. The anode material according to claim 1, **characterized in that** an ID/IG of the anode material is 0.5 to 5.0.

7. The anode material according to claim 1, **characterized in that** the anode material meets at least one of the following conditions:

(1) a specific surface area of the anode material is less than or equal to 5 $m^2$/g;
(2) a total pore volume of the anode material is 0.001 $cm^3$/g to 0.1 $cm^3$/g;
(3) a compaction density of the anode material is 0.8 $g/cm^3$ to 1.2 $g/cm^3$;
(4) the anode material comprises micropores, and based on the total pore volume of the anode material, a volume proportion of the micropores is less than or equal to 5%;
(5) the anode material comprises mesopores, and based on the total pore volume of the anode material, a volume proportion of the mesopores is 87% to 97%;
(6) the anode material comprises macropores, and based on the total pore volume of the anode material, a volume proportion of the macropores is less than or equal to 13%;
(7) a particle size D10 of the anode material is 1 $\mu$m to 5 $\mu$m;
(8) a particle size D50 of the anode material is 6 $\mu$m to 16 $\mu$m; and
(9) a particle size D90 of the anode material is 16 $\mu$m to 24 $\mu$m.

8. The anode material according to claim 1, **characterized in that** an average pore size of pores of the anode material is 0.5 nm to 20 nm.

9. The anode material according to claim 1, **characterized in that** a thickness of the carbon coating layer is 0.1 nm to 1,000 nm; preferably, the thickness of the carbon coating layer is 10 nm to 1,000 nm.

10. The anode material according to claim 1, **characterized in that** the active substance meets at least one of the following conditions:

(1) the active substance comprises one or more of Si, Sn, Ge, Pb, Ag, Mg, Zn, Ga, In, Sb, Bi, and alloy materials thereof;
(2) the active substance comprises a silicon material, the silicon material comprises silicon particles, and the silicon particles comprise one of amorphous silicon, crystalline silicon, and a composite of crystalline silicon and amorphous silicon;
(3) the active substance comprises a silicon material, and the silicon material comprises at least one of a silicon oxide and a silicon alloy;
(4) the active substance comprises a silicon material, the silicon material comprises silicon particles and silicon oxide layers located on surfaces of the silicon particles, and the silicon oxide layers comprise silicon oxides; and
(5) an average particle size of the active substance is 0.1 nm to 500 nm.

11. The anode material according to claim 10, **characterized in that** the active substance meets at least one of the following conditions:

(1) the active substance comprises a silicon material, the silicon material comprises silicon particles, and the silicon particles comprise amorphous silicon;
(2) the active substance comprises a silicon material, the silicon material comprises at least one of a silicon oxide and a silicon alloy; and
(3) the active substance comprises a silicon material, the silicon material comprises silicon particles and silicon oxide layers located on surfaces of the silicon particles; the silicon oxide layers comprise silicon oxides, a general formula of the silicon oxides is SiOx, wherein 0.5<_x<2; calculated with a mass of the silicon material as 100%, a mass percentage content of oxygen atoms in the silicon material is 1% to 18%.

12. The anode material according to claim 1, **characterized in that** the matrix meets at least one of the following conditions:

(1) a total pore volume of the matrix is 0.5 cm$^3$/g to 2.0 cm$^3$/g;
(2) a specific surface area of the matrix is 600 m$^2$/g to 3,000 m$^2$/g;
(3) the matrix comprises a carbon matrix, and the carbon matrix comprises one or more of amorphous carbon, graphitized carbon, a mesophase carbon microsphere, and a carbon gel; and
(4) the matrix comprises a non-carbon matrix, and the non-carbon matrix comprises one or more of a metal oxide, a silicide, a silicate, a phosphate, a titanate, and an aluminum borate salt.

13. The anode material according to claim 1, **characterized in that** the matrix comprises a carbon matrix, the active substance comprises a silicon material, and the anode material further meets at least one of the following conditions:

(1) based on the mass of the anode material, a mass proportion of element carbon of the anode material is 40% to 60%; and
(2) based on the mass of the anode material, a mass proportion of element silicon of the anode material is 35% to 55%.

14. A negative electrode plate, comprising a negative current collector and a negative active material layer arranged on the negative current collector, **characterized in that** the negative active material layer comprises the anode material according to any one of claims 1-13.

15. A secondary battery, **characterized in that** it comprises the negative electrode plate according to claim 14.

FIG. 1A

FIG. 1B

**EUROPEAN SEARCH REPORT**

Europäisches
Patentamt
European
Patent Office
Office européen
des brevets

Application Number

EP 25 18 2605

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 118 231 635 A (BTR NEW MAT GROUP CO LTD; SHENZHEN DINGYUAN NEW MATERIAL TECH CO LTD) 21 June 2024 (2024-06-21) * paragraphs [0001] - [0022], [0066] - [0074], [0078] - [0082], [0111] - [0113] * | 1-8, 10-15 | INV. H01M4/134 H01M4/36 H01M4/38 H01M4/583 H01M10/0525 H01M4/02 |
| X | CN 118 263 409 A (BTR NEW MAT GROUP CO LTD; HUIZHOU DINGYUAN NEW ENERGY TECH CO LTD) 28 June 2024 (2024-06-28) * paragraphs [0016], [0021], [0022] * | 1,7, 9-12,14, 15 | H01M4/48 H01M4/587 H01M4/62 |
| A | CN 118 039 887 A (BTR NEW MAT GROUP CO LTD; HUIZHOU DINGYUAN NEW ENERGY TECH CO LTD) 14 May 2024 (2024-05-14) * paragraphs [0022] - [0029], [0041], [0069] - [0070] * | 1-15 | |
| A | CN 117 790 767 A (BTR NEW MAT GROUP CO LTD; HUIZHOU DINGYUAN NEW ENERGY TECH CO LTD) 29 March 2024 (2024-03-29) * paragraphs [0010] - [0020], [0023] * | 1-15 | |

TECHNICAL FIELDS SEARCHED (IPC)

H01M

The present search report has been drawn up for all claims

| Place of search | Date of completion of the search | Examiner |
|---|---|---|
| Munich | 7 November 2025 | Mugnaini, Veronica |

EPO FORM 1503 03.82 (P04C01)

## ANNEX TO THE EUROPEAN SEARCH REPORT
## ON EUROPEAN PATENT APPLICATION NO.

EP 25 18 2605

This annex lists the patent family members relating to the patent documents cited in the above-mentioned European search report.
The members are as contained in the European Patent Office EDP file on
The European Patent Office is in no way liable for these particulars which are merely given for the purpose of information.

07-11-2025

| Patent document cited in search report | Publication date | Patent family member(s) | Publication date |
|---|---|---|---|
| CN 118231635 A | 21-06-2024 | NONE | |
| CN 118263409 A | 28-06-2024 | CN 118263409 A | 28-06-2024 |
| | | CN 120019500 A | 16-05-2025 |
| | | EP 4576251 A1 | 25-06-2025 |
| | | US 2025149565 A1 | 08-05-2025 |
| | | WO 2024139653 A1 | 04-07-2024 |
| CN 118039887 A | 14-05-2024 | CN 118039887 A | 14-05-2024 |
| | | WO 2025167099 A1 | 14-08-2025 |
| CN 117790767 A | 29-03-2024 | NONE | |

EPO FORM P0459

For more details about this annex : see Official Journal of the European Patent Office, No. 12/82